# EUROPEAN PATENT APPLICATION

(11) **EP 3 913 712 A1**
(43) Date of publication of application: **24.11.2021**
(21) Application number: 20866930.9
(22) Date of filing: 30.03.2020
(51) Int. Cl.: H01M 4/66, H01M 10/04

(54) **COMPOSITE CURRENT COLLECTOR, ELECTRODE PLATE, ELECTROCHEMICAL DEVICE, AND ELECTRONIC DEVICE**

(71) Applicant: Ningde Amperex Technology Ltd., Ningde, Fujian 350900 (CN)
(72) Inventor: WANG, Weihan, Ningde, Fujian 350900 (CN); TAO, Xinghua, Ningde, Fujian 350900 (CN); SHENG, Yangping, Ningde, Fujian 350900 (CN)
(74) Representative: Klunker IP Patentanwälte PartG mbB
(86) International application number: PCT/CN2020/082121
(87) International publication number: WO 2021/195855

(57) **Abstract**

This application provides a current collector, including an insulation layer and a conductive layer. The insulation layer is a hot melt adhesive layer or a composite film layer formed by laminating a polymer layer and a hot melt adhesive layer; and the conductive layer is disposed on at least one surface of the insulation layer and bonded with the hot melt adhesive layer. The conductive layer is bonded with the hot melt adhesive layer, making a relatively strong bonding force between the conductive layer and the insulation layer, so that the conductive layer does not easily peel off. This application further provides an electrode plate and an electrochemical apparatus that use the foregoing current collector.

## Description

### TECHNICAL FIELD

This application relates to the field of energy storage technologies, and in particular, to a current collector, and an electrode plate, an electrochemical apparatus, and an electronic apparatus using the current collector.

### BACKGROUND

Lithium-ion batteries have many advantages such as high mass and volume energy density, long cycle life, high nominal voltage, low self-discharge rate, small volume, and light weight, and therefore are extensively applied in the field of consumer electronics. With rapid development of electric vehicles and mobile electronic devices in recent years, people have increasingly high requirements on the energy density, security, and cycle performance of lithium-ion batteries.

As an important component of a lithium-ion battery, a current collector has a function of collecting current generated by active substance of the lithium-ion battery to generate a larger current for external output. In the prior art, to improve security performance and energy density of lithium-ion batteries, metal layers are laminated on both surfaces of a polymer to form a current collector. The current collector is capable of preventing accidents such as fire and explosion that occur due to short circuits when an exception such as collision, squeezing, or puncture occurs on the lithium-ion batteries. Compared with a metal foil current collector, the current collector is also capable of reducing weight of the current collector and improving energy density of lithium-ion batteries. The current collector typically includes a plastic film and metal conductive layers disposed on two opposite sides of the plastic film. However, a bonding force between the metal layer and the plastic film is relatively small, making a conductive layer prone to peel off after processing or long-term usage of lithium-ion batteries.

### SUMMARY

To overcome the foregoing disadvantages of the prior art, this application provides a current collector that is capable of preventing a conductive layer from easily peeling off, and an electrode plate, an electrochemical apparatus, and an electronic apparatus using the current collector.

An embodiment of this application provides a current collector, including an insulation layer and a conductive layer. The insulation layer is a hot melt adhesive layer or a composite film layer formed by laminating a polymer layer and a hot melt adhesive layer; and the conductive layer is disposed on at least one surface of the insulation layer and bonded with the hot melt adhesive layer. The conductive layer is directly bonded with the hot melt adhesive layer, making a stronger bonding force between the conductive layer and the insulation layer, so that the conductive layer does not easily peel off.

In some embodiments, a thickness of the insulation layer is 2 µm to 50 µm. If the insulation layer is excessively thin, the current collector easily breaks under a pulling force during processing of the current collector and a problem of breaking of the current collector cannot be effectively resolved. If the insulation layer is excessively thick, volume energy density of an electrochemical energy storage apparatus using the current collector may be affected.

In some embodiments, the composite film layer includes the polymer layer and hot melt adhesive layers disposed on two opposite sides of the polymer layer, and the conductive layer is disposed on a side of each hot melt adhesive layer that faces away from the polymer layer. The conductive layer is bonded with the polymer layer through the hot melt adhesive layer, adding to a peeling force required to peel the conductive layer off the polymer layer, so that the conductive layer does not easily peel off the insulation layer.

In some embodiments, a thickness of the polymer layer is 2 µm to 12 µm, and a thickness of the hot melt adhesive layer is 0.5 µm to 5 µm.

In some embodiments, a polymer in the polymer layer is selected from at least one of polyethylene, polypropylene, polyethylene terephthalate, polyethylene terephthalate, polyterephthalamide, and polyimide.

In some embodiments, a hot melt adhesive in the hot melt adhesive layer is selected from at least one of polyolefin, ethylene-propylene copolymer, ethylene-vinyl acetate copolymer, ethylene-vinyl alcohol copolymer, polyamide, polyurethane, epoxy resin, styrene-isoprene-styrene copolymer, styrene-butadiene-styrene copolymer, styrene-(ethylene-butylene)-styrene copolymer, and styrene-(ethylene-propylene)-styrene copolymer.

In some embodiments, a thickness of the conductive layer is 20 nm to 5,000 nm.

In some embodiments, the conductive layer includes at least one of a metal conductive layer and a non-metal conductive layer.

In some embodiments, the metal conductive layer includes at least one of aluminum, copper, nickel, iron, titanium, silver, gold, cobalt, chromium, molybdenum, tungsten, and an alloy thereof; and the non-metal conductive layer includes at least one of graphite, carbon black, carbon nanotube, poly(3,4-ethylenedioxythiophene), and a mixture thereof.

An embodiment of this application further provides an electrode plate, including the current collector and an active substance layer disposed on a side of a conductive layer that faces away from the insulation layer.

An embodiment of this application further provides an electrochemical apparatus using the electrode plate and an electronic apparatus using the electrochemical apparatus.

### BRIEF DESCRIPTION OF DRAWINGS

To describe the technical solutions in the embodiments of this application or in the prior art more clearly, the following briefly describes the accompanying drawings for describing the embodiments or the prior art. Apparently, the accompanying drawings in the following description show merely some embodiments of this application, and a person of ordinary skill in the art may still derive other drawings from these accompanying drawings without creative efforts.
FIG. 1 is a schematic structural diagram of a current collector according to an embodiment of this application, and
FIG. 2 is a schematic structural diagram of a current collector according to another embodiment of this application.

Reference signs of main components:
current collector 100, 200
insulation layer 10, 210
conductive layer 30, 230
first surface 11, 211, 221
second surface 12, 212, 223
polymer layer 220
hot melt adhesive layer 240

This application will be further described with reference to the accompanying drawings in the following specific embodiments.

### DESCRIPTION OF EMBODIMENTS

The following clearly and fully describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application without creative efforts shall fall within the protection scope of this application.

It should be noted that when a component is referred to as being "connected" to another component, it may be directly connected to the another component or an intermediate component may be present. When a component is considered to be "disposed" at another component, it may be directly disposed at the another component or an intermediate component may be present. Unless otherwise defined, all technical and scientific terms used herein shall have the same meanings as commonly understood by those skilled in the art to which this application belongs. The terms used in the embodiments of this application are merely intended to describe specific embodiments but not intended to constitute any limitation on this application. The term "and/or" used herein includes any and all combinations of one or more relevant listed items.

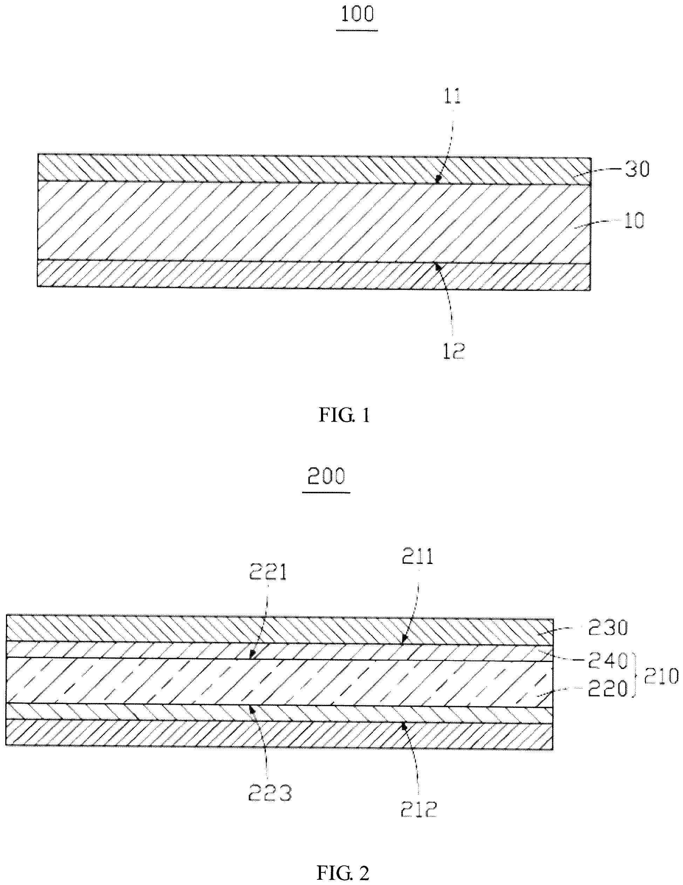

Referring to FIG. 1, a current collectorcurrent collector 100 according to a first embodiment of this application includes an insulation layer 10 and a conductive layer 30. The insulation layer 10 includes a first surface 11 and a second surface 12 that are disposed oppositely. The conductive layer 30 is disposed on the first surface 11 and the second surface 12. According to another embodiment of this application, the conductive layer 30 may alternatively be disposed on only the first surface 11 or the second surface 12.

The insulation layer 10 is a hot melt adhesive layer. When a current collector is being prepared, a conductive layer is first laminated on a hot melt adhesive film that has no adhesiveness at a room temperature. Then, the current collector is hot pressed to bond a metal layer with the hot melt adhesive layer, thus increasing a bonding force between the metal layer and the insulation layer. The hot melt adhesive may be selected from at least one of polyolefin (PO), ethylene acrylic acid copolymer (EAA), ethylene-vinyl acetate copolymer (EVA), ethylene-vinyl alcohol copolymer (EVOH), polyamide (PA), polyurethane (PU), epoxy resin (EPO), styrene-isoprene-styrene copolymer (SIS), styrene-butadiene-styrene copolymer (SBS), styrene-(ethylene-butylene)-styrene copolymer (SEBS), and styrene-(ethylene-propylene)-styrene copolymer (SEPS).

According to another embodiment of this application, a thickness of the insulation layer 10 is 2 µm to 50 µm. If the insulation layer 10 is excessively thin, the current collector easily breaks under a pulling force during processing of the current collector and a problem of breaking of the current collector 100 cannot be effectively resolved. If the insulation layer 10 is excessively thick, volume energy density of an electrochemical energy storage apparatus using the current collector 100 may be affected.

The conductive layer 30 is bonded with the hot melt adhesive layer. According to different materials used for the conductive layer 30, the current collector 100 may be used as a positive electrode or a negative electrode. Specifically, the conductive layer 30 includes at least one of a metal conductive layer and a non-metal conductive layer. A material of the metal conductive layer may be selected from at least one of aluminum, copper, nickel, iron, titanium, silver, gold, cobalt, chromium, molybdenum, tungsten, and a composition (alloy) thereof. A material of the non-metal conductive layer may be selected from at least one of graphite, carbon black, carbon nanotube, poly(3,4-ethylenedioxythiophene), and a mixture thereof. Optionally, a thickness of the conductive layer 30 is 20 nm to 5,000 nm, so that the current collector has a relatively appropriate thickness while ensuring a conductivity effect.

According to another embodiment of this application, the current collector 100 may be prepared through deposition/coating on two opposite surfaces of the insulation layer 10 by using a physical vapor deposition method, an electroless plating method, or a gravure printing method to form a conductive layer, or may be prepared by directly pressing the conductive layer 30 to the insulation layer 10 by using a mechanical pressing method. When the mechanical pressing method is used to prepare the current collector 100, if the conductive layer 30 is too thin to be processed, a release film may be first deposited with the conductive layer 30. Then, the release film with the conductive layer 30 deposited is directly pressed to the insulation layer 10 to obtain the current collector 100.

In the current collector 100 according to this embodiment of this application, the conductive layer 30 is directly bonded to the hot melt adhesive layer that is used as the insulation layer 10. Therefore, a bonding force between the conductive layer 30 and the insulation layer 10 is relatively strong, so that the conductive layer 30 does not easily peel off.

Referring to FIG. 2, a current collector 200 according to a second embodiment of this application includes an insulation layer 210 and a conductive layer 230. The insulation layer 210 includes a first surface 211 and a second surface 212 that are disposed oppositely. The conductive layer 230 is disposed on the first surface 211 and the second surface 212. According to another embodiment of this application, the conductive layer 230 may alternatively be disposed on only the first surface 211 or the second surface 212.

The insulation layer 210 is a composite film layer formed by laminating a polymer layer 220 and a hot melt adhesive layer 240. The polymer layer 220 includes a first surface 221 and a second surface 223 that are disposed oppositely. The hot melt adhesive layer 240 is disposed on the first surface 221 and the second surface 223.

A material of the polymer layer 220 may be selected from at least one of polyethylene, polypropylene, polyethylene terephthalate, polyethylene terephthalate, polyterephthalamide, and polyimide. Optionally, a thickness of the polymer layer 220 is 2 µm to 12 µm. If the polymer layer is excessively thin, the current collector easily breaks under a pulling force during processing of the current collector and a problem of breaking of the current collector cannot be effectively resolved. If the polymer layer is excessively thick, volume energy density of an electrochemical energy storage apparatus using the current collector may be affected.

A hot melt adhesive used by the hot melt adhesive layer 240 may be selected from at least one of polyolefin (PO), ethylene acrylic acid copolymer (EAA), ethylene-vinyl acetate copolymer (EVA), ethylene-vinyl alcohol copolymer (EVOH), polyamide (PA), polyurethane (PU), epoxy resin (EPO), styrene-isoprene-styrene copolymer (SIS), styrene-butadiene-styrene copolymer (SBS), styrene-(ethylene-butylene)-styrene copolymer (SEBS), and styrene-(ethylene-propylene)-styrene copolymer (SEPS). Optionally, a thickness of each hot melt adhesive layer 240 is 0.5 µm to 5 µm, so that the current collector has a relatively appropriate thickness while ensuring a bonding force between the polymer layer 220 and the conductive layer.

The conductive layer 230 is disposed on a side of each hot melt adhesive layer 240 that faces away from the polymer layer and is bonded with the hot melt adhesive layer 240. According to different materials used for the conductive layer 230, the current collector 200 may be used as a positive electrode or a negative electrode. A material of the conductive layer 230 is the same as a material of the conductive layer 30. Details are not described herein. Optionally, a thickness of the conductive layer 30 is 20 nm to 5,000 nm.

In the current collector 200 according to this embodiment, the conductive layer 230 is bonded to the polymer layer 220 through the hot melt adhesive layer 240, making a stronger bonding force between the conductive layer 230 and the polymer layer 220 so that the conductive layer 230 does not easily peel off.

An embodiment of this application further provides an electrode plate. The electrode plate includes any one of the foregoing current collectors and an active substance layer. The active substance layer is disposed on a side of a conductive layer that faces away from an insulation layer. When the current collector is used as a positive electrode, the active substance layer is a positive electrode active substance layer. When the current collector is used as a negative electrode, the active substance layer is a negative electrode active substance layer. The positive electrode active substance layer includes a positive electrode active material that is capable of intercalating and releasing lithium ions. Specifically, the positive electrode active material may be selected from one or more of lithium transition metal composite oxides and compounds obtained by adding another transition metal, non-transition metal, or nonmetal to the lithium transition metal composite oxides, where the lithium transition metal composite oxides include lithium cobalt oxide, lithium nickel oxide, lithium manganese oxide, lithium nickel manganese oxide, lithium nickel cobalt manganese oxide, and lithium nickel cobalt aluminum oxide. The negative electrode active substance layer includes a negative electrode active material that is capable of intercalating and releasing lithium ions. Specifically, the negative electrode active material may be selected from one or more of soft carbon, hard carbon, artificial graphite, natural graphite, silicon, silicon oxide, silicon carbon composite, and lithium titanate.

An embodiment of this application further provides an electrochemical apparatus, where the electrochemical apparatus includes a positive electrode plate, a negative electrode plate, a separator, a package housing, and an electrolyte. The separator is disposed between the positive electrode plate and the negative electrode plate. The positive electrode plate, the separator, and the negative electrode plate are stacked or winded to form a battery cell. The battery cell and the electrolyte are accommodated in the package housing. Any one of the foregoing current collectors may be used as the positive electrode plate of the electrochemical apparatus or the negative electrode plate of the electrochemical apparatus. It should be noted that the electrochemical apparatus may alternatively be a metal lithium battery or a super capacitor. The foregoing merely shows an embodiment in which the electrochemical apparatus is a lithium-ion battery.

An embodiment of this application further provides an electronic apparatus using the foregoing electrochemical apparatus. The electronic apparatus may be any existing electronic apparatus, for example, a notebook computer, a portable telephone, or a television.

Below, this application will be specifically described with Examples and Comparative Examples.

### Example 1

A PO hot melt adhesive film was used as an insulation layer and placed between a two-layer aluminum foil that was used as a conductive layer to obtain a current collector through hot pressing lamination. A hot pressing temperature was 85°C, a hot pressing pressure was 0.6 Mpa, a hot pressing time was 20s, a thickness of the aluminum foil was 5,000 nm, and a thickness of the insulation layer was 2 µm.

### Example 2

A preparation procedure in Example 2 was substantially the same as that in Example 1, except that a thickness of the insulation layer was 50 µm.

### Example 3

A preparation procedure in Example 3 was substantially the same as that in Example 1, except that a thickness of the insulation layer was 25 µm.

### Example 4

A preparation procedure in Example 4 was substantially the same as that in Example 1, except that a thickness of the insulation layer was 30 µm.

### Example 5

A PET film that was used as a polymer layer was coated on both surfaces with PO hot melt adhesive layers to obtain an insulation layer. A thickness of the PET film was 2 µm, a thickness of the PO hot melt adhesive layer was 2 µm, and a thickness of the insulation layer was 6 µm. The insulation layer and an aluminum foil that was used as a conductive layer were hot pressed to obtain a current collector. A thickness of the aluminum foil was 5,000 nm, a hot pressing temperature was 85°C, a hot pressing pressure was 0.6 Mpa, and a hot pressing time was 20s.

### Example 6

A preparation procedure in Example 6 was substantially the same as that in Example 5, except that a thickness of the PET film layer was 6 µm and a thickness of the insulation layer was 10 µm.

### Example 7

A preparation procedure in Example 7 was substantially the same as that in Example 5, except that a thickness of the PET film layer was 10 µm and a thickness of the insulation layer was 14 µm.

### Example 8

A preparation procedure in Example 8 was substantially the same as that in Example 5, except that a thickness of the PET film layer was 12 µm and a thickness of the insulation layer was 16 µm.

### Example 9

An aluminum layer that was used as a conductive layer was deposited on a surface of a release PET film through a vapor deposition method to obtain an aluminum plated release PET film. A thickness of the release PET film was 36 µm and the release PET film was coated with a silicone release agent on a surface. A thickness of the aluminum layer was 20 nm, an aluminum plating vacuum was 2.0 × 10⁻² Pa, and an aluminum plating speed was 1 nm/s. A PET film that was used as a polymer layer was coated on both surfaces with PO hot melt adhesive layers to obtain an insulation layer. A thickness of the PET film was 12 µm, a thickness of the PO hot melt adhesive layer was 2 µm, and a thickness of the insulation layer was 16 µm. The insulation layer and the aluminum plated release PET film were hot pressed with the insulation layer attached to the aluminum layer, and then the release PET film was peeled off, to obtain a current collector. A hot pressing temperature was 85°C, a hot pressing pressure was 0.6 Mpa, and a hot pressing time was 20s.

### Example 10

A preparation procedure in Example 10 was substantially the same as that in Example 9, except that a thickness of the aluminum layer was 500 nm.

### Example 11

A preparation procedure in Example 11 was substantially the same as that in Example 9, except that a thickness of the aluminum layer was 1,000 nm.

### Example 12

A preparation procedure in Example 12 was substantially the same as that in Example 9, except that a thickness of the aluminum layer was 3,000 nm.

### Example 13

A PET film that was used as a polymer layer was coated on both surfaces with EAA hot melt adhesive layers to obtain an insulation layer. A thickness of the PET film was 12 µm, a thickness of the EAA hot melt adhesive layer was 2 µm, and a thickness of the insulation layer was 16 µm. The insulation layer and an aluminum foil that was used as a conductive layer were hot pressed to obtain a current collector. A thickness of the aluminum foil was 3,000 nm, a hot pressing temperature was 85°C, a hot pressing pressure was 0.6 Mpa, and a hot pressing time was 20s.

### Example 14

A preparation procedure in Example 14 was substantially the same as that in Example 13, except that a type of the hot melt adhesive is EVA.

### Example 15

A preparation procedure in Example 15 was substantially the same as that in Example 13, except that a type of the hot melt adhesive is EVOH.

### Example 16

A preparation procedure in Example 16 was substantially the same as that in Example 12, except that the conductive layer was copper foil.

### Comparative Example 1

An aluminum layer that was used as a conductive layer was deposited on a surface of a PET film that was used as a polymer layer through a vapor deposition method to obtain a current collector. A thickness of the PET film was 12 µm, an aluminum plating thickness was 1,000 nm, an aluminum plating vacuum was 2.0 × 10⁻² Pa, and an aluminum plating speed was 1 nm/s.

A bonding force test was performed on the conductive layers of the current collectors provided in Examples 1 to 16 and Comparative Example 1. A test method was using a 180° peeling test standard to test the bonding force. Specifically, the current collector was cut into 15 mm × 54.2 mm stripes, and the bonding force of the conductive layer was tested in accordance with the 180° peeling test standard. Experiment parameters and test results are shown in Table 1.

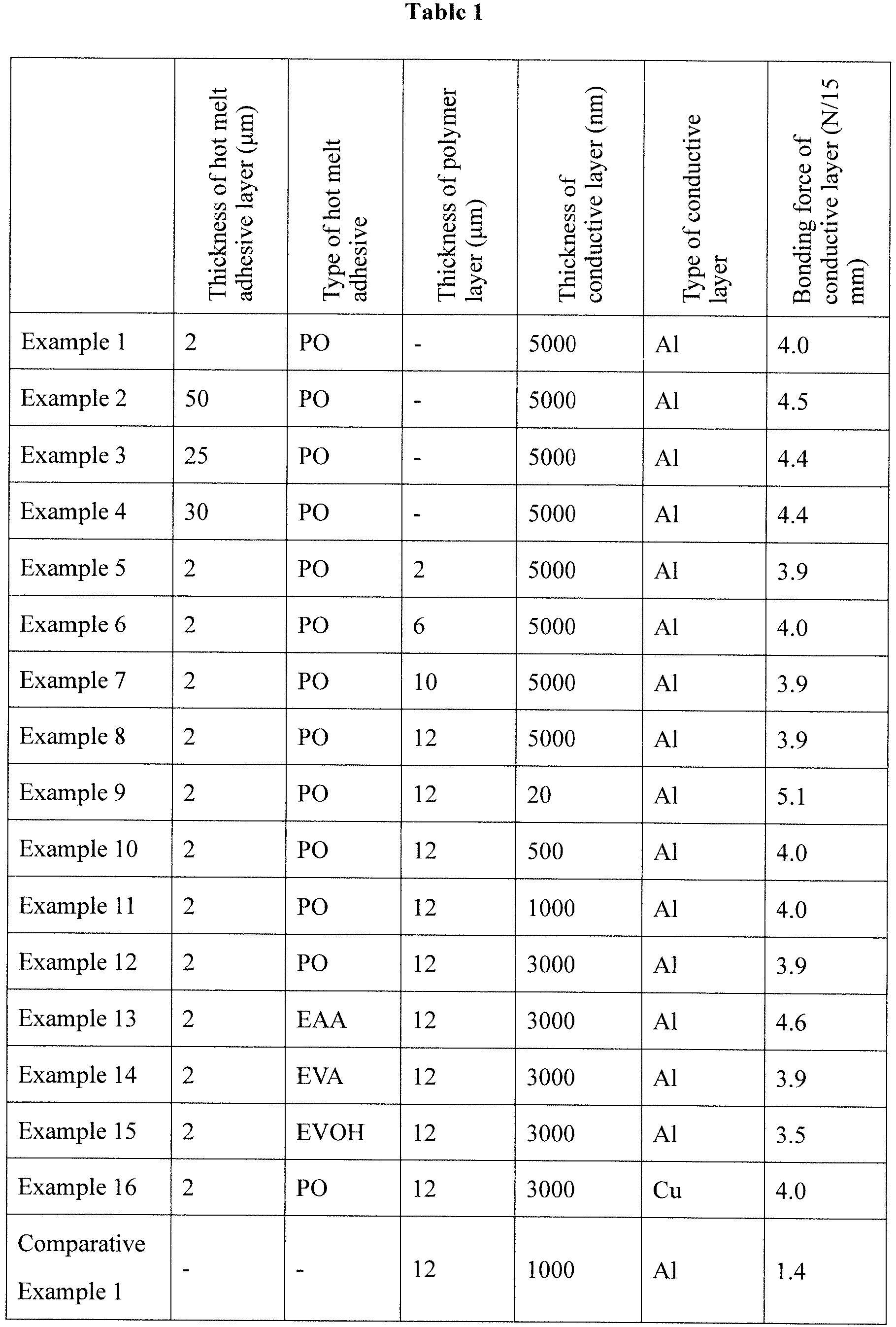

It can be learned from Table 1 that a bonding force of the conductive layer of the current collector provided in this application is far greater than a bonding force of the conductive layer of the current collector in Comparative Example 1, which can effectively resolve the problem that a conductive layer easily peels off an insulation layer.

The foregoing disclosed are merely exemplary embodiments of this application and certainly are not intended to limit the claims of this application. Therefore, equivalent variations made based on the claims of this application still fall within the scope covered by this application.

## Claims

1. A current collector, **characterized by** comprising an insulation layer and a conductive layer, wherein
the insulation layer is a hot melt adhesive layer or a composite film layer formed by laminating a polymer layer and a hot melt adhesive layer; and
the conductive layer is disposed on at least one surface of the insulation layer and bonded with the hot melt adhesive layer.

2. The current collector according to claim 1, **characterized in that** a thickness of the insulation layer is 2 µm to 50 µm.

3. The current collector according to claim 1, **characterized in that** the composite film layer comprises the polymer layer and hot melt adhesive layers disposed on two opposite sides of the polymer layer, and the conductive layer is disposed on a side of each hot melt adhesive layer that faces away from the polymer layer.

4. The current collector according to claim 3, **characterized in that** a thickness of the polymer layer is 2 µm to 12 µm and a thickness of the hot melt adhesive layer is 0.5 µm to 5 µm.

5. The current collector according to claim 1, **characterized in that** the polymer layer is selected from at least one of polyethylene, polypropylene, polyethylene terephthalate, polyethylene terephthalate, polyterephthalamide, and polyimide.

6. The current collector according to claim 1, **characterized in that** a hot melt adhesive in the hot melt adhesive layer is selected from at least one of polyolefin, ethylene-propylene copolymer, ethylene-vinyl acetate copolymer, ethylene-vinyl alcohol copolymer, polyamide, polyurethane, epoxy resin, styrene-isoprene-styrene copolymer, styrene-butadiene-styrene copolymer, styrene-(ethylene-butylene)-styrene copolymer, and styrene-(ethylene-propylene)-styrene copolymer.

7. The current collector according to claim 1, **characterized in that** a thickness of the conductive layer is 20 nm to 5,000 nm.

8. The current collector according to claim 1, **characterized in that** the conductive layer comprises at least one of a metal conductive layer and a non-metal conductive layer.

9. The current collector according to claim 8, **characterized in that** the metal conductive layer comprises at least one of aluminum, copper, nickel, iron, titanium, silver, gold, cobalt, chromium, molybdenum, tungsten, and an alloy thereof; and the non-metal conductive layer comprises at least one of graphite, carbon black, carbon nanotube, poly(3,4-ethylenedioxythiophene), and a mixture thereof.

10. An electrode plate, **characterized by** comprising:
the current collector according to any one of claims 1 to 9; and
an active substance layer, disposed on a side of a conductive layer of the current collector that faces away from an insulation layer.

11. An electrochemical apparatus, **characterized by** comprising the electrode plate according to claim 10.

12. An electronic apparatus, **characterized by** comprising the electrochemical apparatus according to claim 11.
